# EUROPEAN PATENT SPECIFICATION

(11) **EP 0 635 128 B1**
(45) Date of publication and mention of the grant of the patent: **04.11.1998**
(21) Application number: 93908005.7
(22) Date of filing: 06.04.1993
(51) Int. Cl.: G01N 27/12

(54) **HUMIDITY SENSOR**
FEUCHTIGKEITSFÜHLER
DETECTEUR D'HUMIDITE

(30) Priority: 06.04.1992 GB 9207507
(43) Date of publication of application: 25.01.1995
(73) Proprietor: ELMWOOD SENSORS LIMITED, North Shields Tyne & Wear, NE29 8SE (GB)
(72) Inventor: HASHEMI, Tooraj, Belmont Durham DH1 2UF (GB)
(74) Representative: Garratt, Peter Douglas
(86) International application number: GB9300722
(87) International publication number: WO9320432

(56) References cited:
- DE-A- 3 150 558
- DE-A- 3 821 620
- US-A- 4 497 701
- US-A- 4 677 415

## Description

This invention relates to improved sensors and to a method of determining the level of humidity of an atmosphere.

It is known that certain ceramic materials exhibit a change in resistance or impedance with changes in the humidity of the atmosphere to which they are exposed. Thus, these ceramic materials have been proposed for use in humidity sensors.

Humidity sensors comprising such ceramic materials offer advantages over conventional hygrometers of the kind which rely on changes of capacitance with change in humidity because changes in resistance are easier to monitor and register electronically.

IEEE Transactions an Electron Devices, Vol 1 ED-29, No. 1, January 1993 describes humidity sensors comprising MgCr₂O₄ - TiO₂ and Ba₂ₓSrₓ TiO₃ doped with MgCr₂O₄. However, in use, the base resistance of the ceramic material gradually increases, necessitating a heat cleaning process between successive operations.

Another known humidity sensitive ceramic is Nb₂O₅ doped with TiO₂. However, as described in Sensors and Actuators 24(1990) 55-60, the ceramic shows a gradual increase in impedance with time. Thus an aging process is required to produce a stable sensitivity to humidity.

Sensors and Actuators 4(1983) 85-96 describes how humidity sensitive ceramics MgCr₂O₄ - TiO₂, TiO₂ - V₂O₅ and Fe₂O₃ have been observed to show a progressive drift in resistance when exposed to highly humid environments.

The problems of drift in resistance and the need for heat cleaning have been overcome in some humidity sensors by the addition of small amounts of alkali ions. However these then produce problems with the stability of the alkali ions at the surface of the sensing materials. Such materials are MgFe₂O₄ doped with 2 mol% K⁺, Li⁺ or Na⁺ and ZnCr₂O₄ - LiZnVO₄ as described in Sensors and Actuators 10(1986) 379-398.

A MgAl₂O₄ sensor, as described in Sensors and Actuators 4 (1983) 85-96, has good humidity sensitivity. However, the impedance in less humid atmospheres was found to be too high for practical measurements.

A sensor consisting of SnO₂ with 10% Al₂O₃ and 5% TiO₂ was found to have shortcomings due to significant temperature dependence and sensitivity to inflammable gases as described in Sensors and Actuators 16(1989) 1-11.

The materials CaMnO₃, SrFeO₃, BaTiO₃, LaCrO₃ and Ba_{0.998}Sb_{0.002}TiO₃ were found to be insensitive to humidity changes. CaTiO₃ CaSnO₃, SrTiO₃ and SrSnO₃ showed humidity sensitivity at elevated temperature but had conductivities too small for practical use as humidity sensors. The materials Co_{0.9}La_{0.1}TiO₃, Ca_{0.9}La_{0.1}SnO₄, Sr_{0.9}La_{0.1}TiO₃ and Sr_{0.9}La_{0.1}SnO₃ showed a performance which was strongly dependent on temperature and a response time which was slow - taking 5 minutes to attain steady-state values of conductivity:

A K₂O doped Ba_{0.5} Sr_{0.5} TiO₃ humidity sensor showed an inductance loop over low relative humidity (5-30%) and low frequency (5-40 Hz) range making it unsuitable for use under those conditions.

As described in Journal of Material Science 26(1991) 3874-3878, Ni(Al, Fe)_{z}O₄ - TiO₂ sensors showed slower response to decreasing humidity than to increasing humidity above 40%. Thus a hysteresis loop is present.

We have discovered that a semi-conducting ceramic composition comprising a solid solution of at least two metal oxides, at least one and preferably both of which being a binary metal oxide having the formula M₂M¹O₄ where M is divalent metal, and M¹ is tetravalent metal is superior to known ceramics for use in humidity sensors since they do not exhibit the disadvantages and drawbacks of the known ceramics described above.

According to a first aspect of the invention there is provided a composition as set out in Claim 1.

According to a second aspect of the invention, there is provided a composition as set out in Claim 2.

The invention also provides a method as set out in Claim 11.

The compositions of the present invention generally exhibit chemical stability within the range of temperatures at which atmospheric humidity is normally required to be measured and furthermore, the porosity of molded forms of the compositions, which is important in a humidity sensor since it controls the amount of surface area available to the atmosphere for a given volume or mass, is readily controllable by use of appropriate means for forming the molded body, e.g. powder pressing and/or sintering.

For the purposes of this specification, Si and Ge are classed as metals. In addition, for the purposes of the specification, where we refer to a solid solution of at least two metal oxides we mean either doping at least one metal oxide with a small amount of at least one other metal oxide, or a true solid solution. The ability of two substances to form solid solutions is determined primarily by geometrical considerations but also by electronic and other factors.

There are two primary ways by which "foreign" species may be introduced into crystal structures as a solid solution with the simultaneous maintenance of thermodynamic equilibrium: (a) the direct substitution of the solute for the host atom, (b) the introduction of the solute into normally unfilled interstitial positions.

In the direct substitutional solid solution (a), the solute cations or anions (or both) substitute in a random manner directly onto the crystal structure of solvent ions; the extent of solution is primarily governed by certain structural and chemical factors.

In interstitial solid solutions (b), the solute ions are normally small and can occupy, normally in limited amounts, interstitial positions rather than substitute for the filled sites of the solvent material.

In general, it will be found that in order to obtain a solid solution the metals of the simple metal oxides and of the binary metal oxides should be chosen from Groups IB, IIB, IVB and VIII of the Periodic Table, and in particular from those which also fall in the 4th and 5th Periods of the Table. All references herein to the Periodic Table relate to the version found on page 149 of "Table of Physical and Chemical Constants" by G.W.C. Kaye and T.H. Laby, published by Longman, 14th Edition.

Specific examples of simple metal oxides suitable for use in this invention are ZnO, Co0, TiO, Co₃O₄ and NiO. Specific examples of binary metal oxides suitable for use in the invention are Zn₂SiO₄, Co₂SiO₄, Ni₂SiO₄, Zn₂GeO₄, CuGeO₃, Co₂GeO₄, Ni₂GeO₄, Zn₂SnO₄, MgSnO₄, Co₂SnO₄, Cd₂SnO₄, Ba₂SnO₄, Ni₂SnO₄.

Specific examples of combinations of oxides which form solid solutions suitable for use in the invention are

| **Combination** | | **Ranges of concentrations at which solid solution is obtainable** |
|---|---|---|
| **A** | **B** | **(mole %)** |
| Zn₂GeO₄ | Co₂GeO₄ | up to 19% B in A or up to 35% A in B |
| Zn₂GeO₄ | Ni₂GeO₄ | less than 19% B in A or up to 14% A in B |
| Zn₂SiO₄ | Co₂SiO₄ | up to 50% B in A or up to at least 10% A in B |
| Co₂GeO₄ | Ni₂GeO₄ | entire range of concentration |
| Zn₂SnO₄ | Co₂SnO₄ | expected to be entire range of concentration |
| Zn₂GeO₄ | CuGeO₃ | |
| Zn₂GeO₄ | Zn₂SiO₄ | entire range of concentration |
| Zn₂SnO₄ | NiO | |
| Zn₂SnO₄ | CoO | |
| Co₂GeO₄ | Co₂SiO₄ | |
| Co₂GeO₄ | Co₂SnO₄ | |
| Co₂SiO₄ | Co₂SnO₄ | |
| Zn₂GeO₄ | Zn₂SnO₄ | |
| Zn₂SiO₄ | Zn₂SnO₄ | |
| Ni₂GeO₄ | Ni₂SiO₄ | |

It is not necessary for the entire composition to be in the form of a solid solution, provided that at least a part of the mixture of oxides has formed a solid solution. The presence of a solid solution in the composition may be detected by X-Ray analysis in known manner.

The composition comprising a solid solution may be formed in any suitable manner. One preferred method involves mixing the oxides and then firing or sintering the mixture. The composition may be formed into a ceramic body such as a pellet or wafer either during or after the step of forming the solid solution. Where the electrical resistance of the as-formed body is too high for the intended use, this may be lowered by annealing in a reducing atmosphere. This means that by appropriate choice and control of heat treatment, electrical resistivity may be adjusted to meet any particular need.

Without wishing to be bound by the following theory, we believe that when the ceramic is of an ionic-type the change in resistance with humidity is due to chemisorption of water molecules on the surface of the oxides. The chemisorption causes dissociation of water molecules to form surface hydroxyls. Physisorption can then take place on top of this.

When the ceramic is of an electronic - type, the water molecules in the atmosphere being detected act as an electron donating gas on the semi-conductive oxides and thereby increase conductivity.

With increased humidity, further layers of water are adsorbed and the high electrostatic fields resulting from the initially adsorbed species causes a far greater dissociation and therefore to a further reduction in resistivity.

At drier conditions, the number of extra charge carriers fall to the extent that the resistivity is dominated by the ceramic bulk.

The invention will now be illustrated by the following Examples and drawings in which:
- Figure 1: is an X-Ray diffraction pattern of the ceramic formed in Example 1.
- Figure 2: is a plot of resistance against atmospheric humidity of the ceramic formed in Example 2.
- Figure 3: is a plot of resistance against atmospheric humidity of the ceramic formed in Example 3.
- Figure 4: is a plot of log(resistance) against relative humidity for the ceramic formed in Example 14.
- Figure 5: is a plot of log(resistance) against relative humidity for the ceramic formed in Example 16.
- Figure 6: is a schematic diagram of one arrangement for the sensor.

### Example 1

In a first experiment, an intimate mixture of ZnO and GeO₂, in the molar ratio of two of ZnO to one of GeO₂, was formed by one of two alternative methods.

In the first a slurry was formed from the powder mixture and de-ionized water. The slurry which was then ball-milled with cylindrical sialon media for approximately 12 hours. The resulting slurry was then dried in an oven to evaporate the water and the residue was ground to powder form in a pestal and mortar. In the second method the powder was mixed by hand in a pestal and mortar. The first of these two methods produces a more intimate mixture of the two starting materials and a finer particle size due to the crushing effect of the ball-milling. Ball-milling, however, is time consuming and best suited to large quantities of powder mix (100-200g). In most experimental cases smaller amounts of each sample were produced (20-30)g. Since it was found that the intimacy of mixing and the particle size produced by pestal and mortar mixing was sufficient to produce monophase, well sintered material from the firing phase, this method was used in preference in most cases.

The mixture was then pressed isostatically into 13mm diameter 1mm thick discs and then fired at 1200°C for 12 hours, thus the calcination and sintering stages were carried our in a single firing process. The sintered bodies exhibited up to 4% expansion in volume. The pellets were then crushed, reground with about 10% cobaltic oxide (Co₃O₄), pressed again into 13mm diameter 1mm thick discs and fired for another 12 hours at 1200°C. The Co₃O₄ is converted to CoO during firing.

In a second experiment an intimate mixture of the three oxides in the same proportions was pressed into 13mm diameter 1mm thick discs and fired for 12 hours at 1200°c.

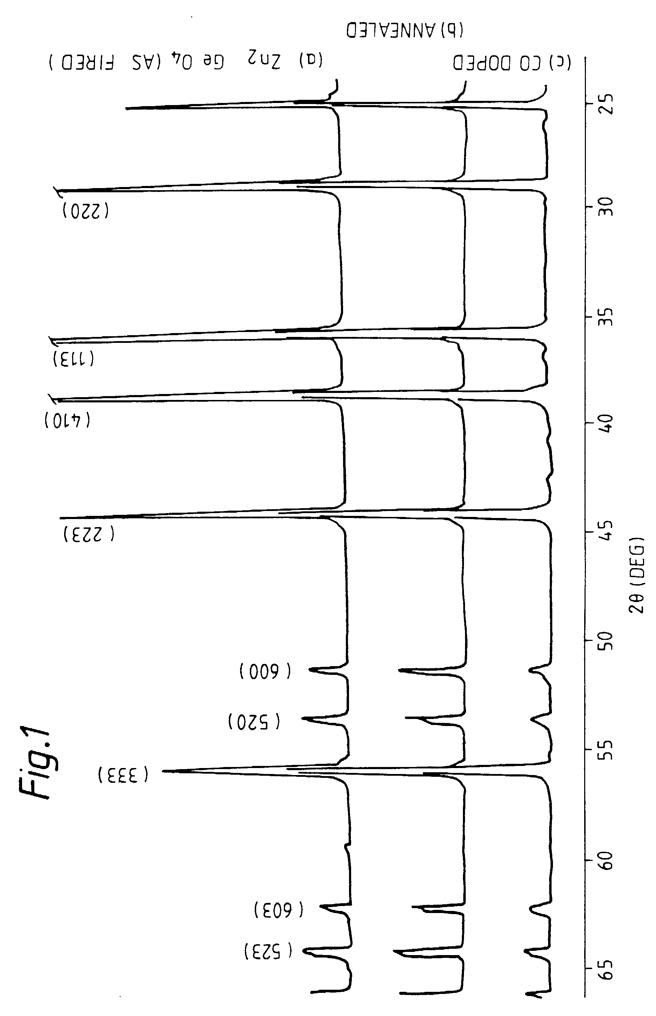

The X-Ray diffraction patterns of the samples showed Zn₂GeO₄ and ZnO indicating that a reaction between the cobalt oxide and zinc germanate has occurred resulting in the formation of cobalt germanate and zinc oxide and that formation of a solid solution between the cobalt germanate and Zn₂GeO₄ has occurred. The X-Ray diffraction patterns are reproduced in Figure 1.

Semi-conductivity was then induced in the product by annealing in a dry nitrogen atmosphere. Resistance versus temperature characteristics of the samples were studied using a purpose built microprocessor controlled system in which two point resistance measurements could be performed on up to 10 samples with temperature controlled from room temperature to 450°C.

Gallium-indium contacts were applied to the top and bottom surfaces of the sintered pellets, which were first smoothed with wet and dry paper. A DC potential of 2 volts was applied across the sample and the resulting current was measured, whilst the sample was heated in air in a computer controlled oven to 450°C at a rate of 3°C per minute. Current measurements were made at temperature increments of 10°C with the sample first held at the required temperature for 2 minutes to allow the current to stabilize. The measurements of temperature and current were recorded by the computer.

The resistance versus relative humidity characteristics were investigated using a purpose built humidity chamber, an electrometer and a commercial humidity meter.

The humidity chamber consisted of a sealed cylindrical chamber with two inlet valves, a gas mixing chamber between them, an outlet valve, a recess into which was sealed the probe from the humidity meter, a copper stage with a thermocouple and temperature control circuit and electrical connections for two point resistance measurements on four samples. The two inlet valves were connected to dry and saturated gas supplies respectively. Bottled nitrogen was used for the dry gas and compressed air bubbled through water at room temperature for the saturated gas. The humidity in the chamber was controlled by allowing a mixture of the two gases into the chamber, whilst allowing air out via the outlet valve. The humidity in the chamber was measured using a Thermal Measurement Systems THP 338 digital Termo-Hygro recorder. A Keithley 617 programmable electrometer was used to provide a constant voltage across the two contacts on the sample and to measure the resulting current. Resistance of the samples was in the range of 100's MΩ so current values to be measured were very small. Gallium-indium contacts were used.

Voltage current characteristics were measured from 0-100V. Current was measured with respect to time for constant of voltage and humidity to check the stability of the samples. Current versus relative humidity was measured, keeping values of voltage and temperature constant.

Measurement of the resistance of the body while exposing it to atmosphere of varying humidity at a given temperature proved that the resistance was highly dependent on the relative humidity. For example, a change of resistivity was found to occur from 5 x 10⁷ ohm in ambient atmosphere to about 10¹² ohm in vacuum or dry atmosphere.

This property was found to be reproducible and reversible.

### Example 2

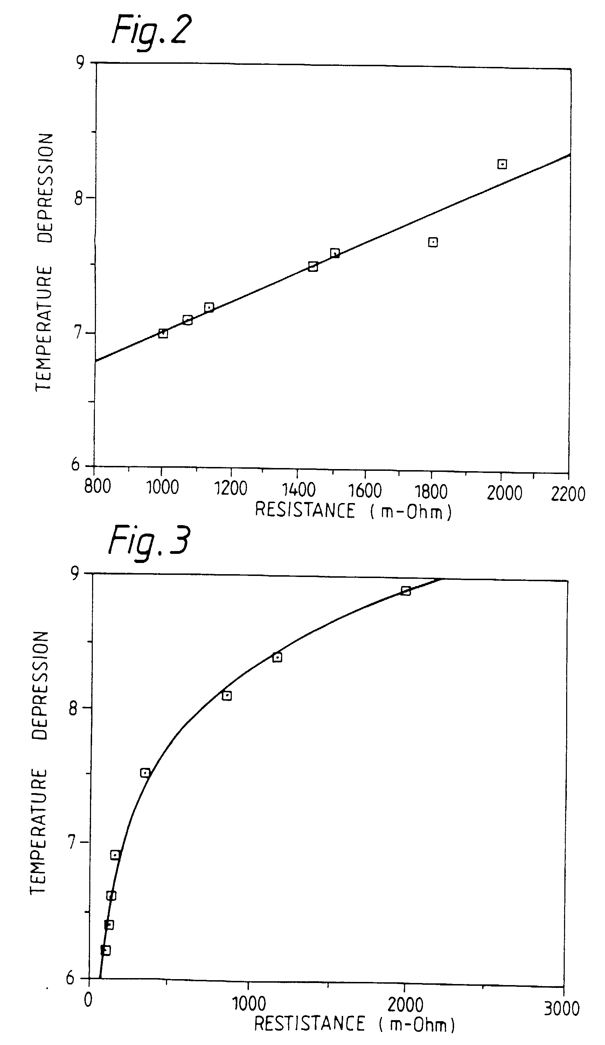

Following the pressing and sintering procedure described in Example 1, a semi-conductive ceramic solid solution of 16 mole % Zn₂GeO₄ and 84 mole % Ni₂GeO₄ was formed and a plot of its resistance against atmospheric humidity, expressed as the difference in temperature between wet bulb and dry bulb, is reproduced as Figure 2.

### Example 3

A semi-conductive ceramic solid solution of 90.5 mole % Zn₂GeO₄ and 9.5 mole % Co₂GeO₄ was formed following the pressing and sintering procedure described in Example 1 and using a sintering temperature of 1200°C, and a plot of its resistance against atmospheric humidity is reproduced as Figure 3.

### Example 4

A semi-conductive doped solid solution was formed in accordance with the procedure described in Example 1 except that the sintered pellets were crushed and ground to a fine powder. The material and required amount of dopant were then mixed thoroughly in a pestal and mortar, as with the precursor powders. The doped material was then pressed into pellets using a small quantity of PVA binder, since once fired the material proved to be too dry to adhere in the green-body form. These pellets were then re-fired in air for 12 hours at 1200°C.

### Examples 5 to 39

Following the pressing and sintering procedure described in Example 1 and using a sintering temperature of 1200°C, semi-conductive ceramic solid solutions were formed from the following combinations of oxides and found to exhibit electrical resistivity which varied with variation in the humidity of the atmosphere to which the ceramic body was exposed. In all the following examples, the reported percentages are molar unless otherwise indicated.

| **Example** | **Composition** |
|---|---|
| 5 | 90.5% Zn₂GeO₄ and 9.5% Co₂GeO₄ |
| 6 | 91.3% Co₂GeO₄ and 8.7% Zn₂GeO₄ |
| 7 | 84% Co₂GeO₄ and 16% Zn₂GeO₄ |
| 8 | 91.3% NI₂GeO₄ and 8.7% Zn₂GeO₄ |
| 9 | 84% Ni₂GeO₄ and 16% Zn₂GeO₄ |
| 10 | 90% Co₂GeO₄ and 10% Ni₂GeO₄ |
| 11 | 50% Co₂GeO₄ and 50% Ni₂GeO₄ |
| 12 | 10% Co₂GeO₄ and 90% Ni₂GeO₄ |
| 13* | 90% Zn₂GeO₄ and 10% CuGeO₃ |
| 14 | Zn₂GeO₄ + 10% Co₃O₄ |
| 15 | Zn₂GeO₄ + 10% NiO |
| 16 | Zn₂GeO₄ + 10% Co₂GeO₄ |
| 17 | Co₂GeO₄ + 10% Zn₂GeO₄ |
| 18 | Zn₂GeO₄ + 10% Ni₂GeO₄ |
| 19 | Ni₂GeO₄ + 10% Zn₂GeO₄ |
| 20 | Zn₂SnO₄ + 10% Co₃O₄ |
| 21 | Zn₂SnO₄ + 10% Co₂SnO₄ |
| 22 | Zn₂SnO₄ + 10% NiO |
| 23 | Zn₂SiO₄ + 10% Co₃O₄ |
| 24 | Zn₂SiO₄ + 10% Co₂SiO₄ |
| 25 | Zn₂SiO₄ + 10% NiO |
| 26 | Zn₂SiO₄ + 10% Ni₂SiO₄ |
| 27 | Zn₂SnO₄ + 10% Cd₂SnO₄ |
| 28 | Zn₂SnO₄ + 10% MgSnO₃ |
| 29 | Zn₂SnO₄ + 10% Ba₂SnO₄ |
| 30 | Zn₂SnO₄ + 10% BaTiO₃ |
| 31 | Zn₂SnO₄ + 10% TiO |
| 32 | MgSnO₄ + 10% Zn₂SnO₄ |
| 33 | Cd₂SnO₄ + 10% Co₂SnO₄ |
| 34 | Zn₂GeO₄ + 10% Zn₂SiO₄ |
| 35 | Zn₂SnO₄ + 10% Co₂GeO₄ |
| 36 | Zn₂GeO₄ + 10% Co₂SiO₄ |
| 37 | Zn₂SnO₄ and 10% by weight, based on |
| | Zn₂SnO₄, of Co₂SnO₄ |
| 38 | Zn₂SiO₄ and 10% by weight, based on Zn₂SiO₄, of Co₂SiO₄ |
| 39 | Co₂SiO₄ and 10% by weight, based on Co₂SiO₄, of Zn₂SiO₄ |

| | |
|---|---|
| *** fired at 1000°C** | |

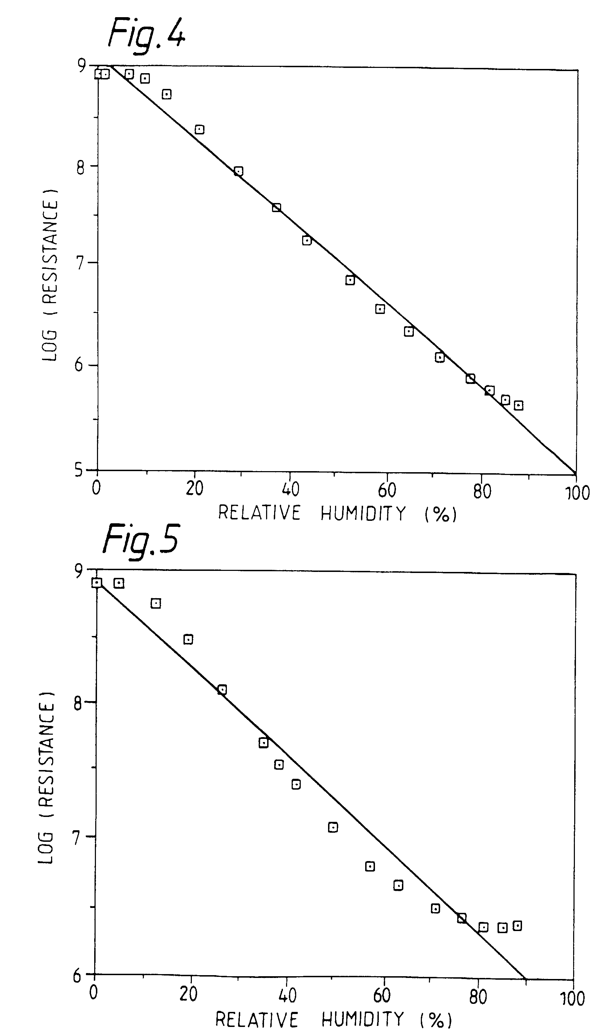

Plots of log (resistance) against relative humidity for the compositions of Examples 14 and 16 are reproduced as Figures 4 and 5, respectively.

Plots of resistance against relative humidity show a decrease in resistance with increasing relative humidity. The decrease in resistance with humidity is approximately exponential, with the resistance levelling off at high and low humidity.

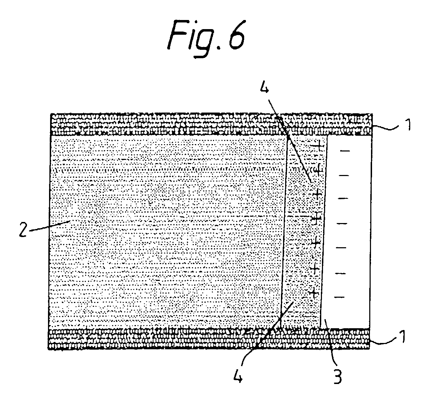

With reference to Figure 6, the sensor comprises electrodes 1, which are in contact with a pellet of the semiconducting ceramic body, 2. The electrolyte, 3, is formed by hydroxyl ions chemisorbed and/or physisorbed on the surface 4 of the ceramic body. The hydroxyl ions are formed by the disassociation of water molecules in the humid atmosphere.

## Claims

1. A humidity sensor comprising a semi-conducting ceramic body having surface exposed to the atmosphere and whose electrical resistance varies with variation in the humidity of the atmosphere to which it is exposed, and means for measuring the resistance of the body and wherein said body comprises a semi-conducting ceramic composition comprising a solid solution of at least two metal oxides, at least one of which is a binary metal oxide having the formula M₂M¹O₄ where M is divalent metal, and M¹ is a tetravavalent metal comprising silicon or germanium.

2. A humidity sensor comprising a semi-conducting ceramic body having surface exposed to the atmosphere and whose electrical resistance varies with variation in the humidity of the atmosphere to which it is exposed, and means for measuring the resistance of the body and wherein said body comprises a semi-conducting ceramic composition comprising a solid solution of at least two metal oxides, at least one of which is a binary metal oxide having the formula M₂M¹O₄ where M is divalent metal, M¹ is a tetravavalent metal, and wherein at least one of the metal oxides is selected from CoO, Co₃O₄, NiO, Co₂SiO₄, Ni₂SiO₄, Co₂GeO₄, Ni₂GeO₄, Co₂SnO₄ and Ni₂SnO₄.

3. A humidity sensor according to claim 1 or claim 2, wherein M is Zn, Co, or Ni.

4. A humidity sensor according to claim 1, 2 or 3, wherein M¹ is Ge.

5. A humidity sensor as claimed in any preceding claim, characterised in that the metals in said at least two metal oxides are selected from Groups IB, IIB, IVB and VIII of the Periodic Table.

6. The humidity sensor as claimed in any preceding claim characterised in that the metals in said at least two metal oxides are selected from the 4th and 5th Period of the Periodic Table.

7. A humidity sensor as claimed in any preceding claim, characterised in that the ceramic composition comprises a solid solution of two metal oxides, both of which are binary metal oxides having the formula M₂M¹O₄ where M is divalent metal and M¹ is tetravalent metal.

8. A humidity sensor as claimed in claim 7, wherein M¹ is the same in both metal oxides.

9. A humidity sensor as claimed in any preceding claim, characterised in that the ceramic composition is porous.

10. A method of determining the level of humidity of an atmosphere, the method comprising measuring the resistance of a semi-conducting ceramic body comprising a solid solution of at least two metal oxides, at least one of which is a binary metal oxide having the formula M₂M¹O₄ where M is a divalent metal and M¹ is silicon or germanium, or wherein at least one of the metal oxides is selected from CoO, Co₃O₄, NiO, Co₂SiO₄, Ni₂SiO₄, Co₂GeO₄, Ni₂GeO₄, Co₂SnO₄ and Ni₂SnO₄, a surface of said body being exposed to said atmosphere.

11. A method according to claim 10, wherein M is Zn, Co or Ni.

12. A method according to claim 10 or 11, wherein both said metal oxides are binary metal oxides.

## Patentansprüche

1. Feuchtigkeitssensor, umfassend einen Halbleiter-Keramikkörper mit einer Oberfläche, die an die Atmosphäre exponiert ist, dessen elektrischer Widerstand sich mit Änderungen der Feuchtigkeit der Atmosphäre ändert, an die er exponiert ist, sowie Mittel zum Messen des Widerstands des Körpers, wobei der Körper eine Halbleiter-Keramikzusammensetzung umfaßt, die eine feste Lösung aus mindestens zwei Metalloxiden aufweist, wobei mindestens eines derselben ein binäres Metalloxid der Formel M₂M¹O₄ darstellt, worin M ein zweiwertiges und M' ein vierwertiges Metall, umfassend Silizium oder Germanium, ist.

2. Feuchtigkeitssensor, umfassend einen Halbleiter-Keramikkörper mit einer Oberfläche, die an die Atmosphäre exponiert ist, dessen elektrischer Widerstand sich mit Änderungen der Feuchtigkeit der Atmosphäre, an die er exponiert ist, ändert, sowie Mittel zum Messen des Widerstands des Körpers, wobei der Körper eine Halbleiter-Keramikzusammensetzung umfaßt, die eine feste Lösung aus mindestens zwei Metalloxiden aufweist, wobei mindestens eines derselben ein binäres Metalloxid mit der Formel M₂M¹O₄ darstellt, worin M ein zweiwertiges Metall und M¹ ein vierwertiges Metall ist und worin mindestens eines der Metalloxide ausgewählt ist unter CoO, Co₃O₄, NiO, Co₂SiO₄, Ni₂SiO₄, Co₂GeO₄, Ni₂GeO₄, Co₂SnO₄ und Ni₂SnO₄.

3. Feuchtigkeitssensor gemäß Anspruch 1 oder Anspruch 2, worin M Zn, Co oder Ni ist.

4. Feuchtigkeitssensor gemäß Anspruch 1, 2 oder 3, worin M¹ Ge ist.

5. Feuchtigkeitssensor gemäß einem der vorstehenden Ansprüche, dadurch gekennzeichnet, daß die Metalle in den mindestens zwei Metalloxiden ausgewählt sind aus den Gruppen IB, IIB, IVB und VIII des Periodensystems.

6. Feuchtigkeitssensor gemäß einem der vorstehenden Ansprüche, dadurch gekennzeichnet, daß die Metalle in den mindestens zwei Metalloxiden aus der vierten und fünften Periode des Periodensystems ausgewählt sind.

7. Feuchtigkeitssensor gemäß einem der vorstehenden Ansprüche, dadurch gekennzeichnet, daß die Keramikzusammensetzung eine feste Lösung aus zwei Metalloxiden umfaßt, die beide binäre Metalloxide mit der Formel M₂M¹O₄ darstellen, worin M ein zweiwertiges und M¹ ein vierwertiges Metall bedeuten.

8. Feuchtigkeitssensor gemäß Anspruch 7, worin M¹ in beiden Metalloxiden gleich ist.

9. Feuchtigkeitssensor gemäß einem der vorstehenden Ansprüche, dadurch gekennzeichnet, daß die Keramikzubereitung porös ist.

10. Verfahren zum Bestimmen des Feuchtigkeitsgrades einer Atmosphäre, umfassend das Messen des Widerstands eines Halbleiter-Keramikkörpers, der eine feste Lösung aus mindestens zwei Metalloxiden umfaßt, wobei mindestens eines derselben ein binäres Metalloxid mit der Formel M₂M¹O₄ ist, worin M ein zwei- wertiges Metall und M¹ Silizium oder Germanium ist oder worin mindestens eines der Metalloxide ausgewählt ist unter CoO, Co₃O₄, NiO, Co₂SiO₄, Ni₂SiO₄, Co₂GeO₄, Ni₂GeO₄, Co₂SnO₄ und Ni₂SnO₄, wobei eine Oberfläche des Körpers an die Atmosphäre exponiert ist.

11. Verfahren gemäß Anspruch 10, worin M Zn, Co oder Ni ist.

12. Verfahren gemäß Anspruch 10 oder 11, worin beide Metalloxide binäre Metalloxide sind.

## Revendications

1. Détecteur d'humidité comprenant un corps semi conducteur en céramique avec une surface exposée à l'atmosphère et dont la résistance électrique varie en fonction de la variation d'humidité de l'atmosphère à laquelle il est exposé, et des moyens pour mesurer la résistance du corps et dans lequel le corps comprend une composition semi conductrice en céramique comprenant une solution solide d'au moins deux oxydes métalliques dont au moins l'un des deux est un oxyde métallique binaire avec la formule M₂M¹O₄ ou M est un métal divalent et M¹ est un métal tétravalent comprenant du silicium ou du germanium.

2. Détecteur d'humidité comprenant un corps semi-conducteur en céramique avec une surface exposée à l'atmosphère et dont la résistance électrique varie en fonction de la variation de l'humidité de l'atmosphère à laquelle il est exposé, des moyens pour mesurer la résistance du corps et dans lequel le corps comprend une composition semiconductrice en céramique comprenant une solution solide d'au moins deux oxydes métalliques, dont au moins l'un des deux est un oxyde métallique binaire avec la formule M₂M¹O₄ ou M est un métal divalent M¹ est un métal tétravalent et dans lequel au moins l'un des oxydes métalliques est choisi à partir de CoO, Co₃O₄,NiO, Co₂SiO₄,Ni₂SiO₄, Co₂GeO₄, Ni₂GeO₄, Co₂SnO₄ et Ni₂SnO₄

3. Détecteur d'humidité selon la revendication 1 ou 2 dans lequel M est Zn, Co ou Ni.

4. Détecteur d'humidité selon la revendication 1, 2 ou 3 dans lequel M¹ est Ge.

5. Détecteur d'humidité selon l'une quelconque des revendications précédentes, caractérisé en ce que les métaux dans au moins deux oxydes métalliques sont choisis à partir des groupes IB, IIB, IVB et VIII de la Classification Périodique des Eléments.

6. Détecteur d'humidité selon l'une quelconque des revendications précédentes caractérisé en ce que les métaux dont au moins deux oxydes métalliques sont choisis à partir de la quatrième et cinquième Classification des Eléments.

7. Détecteur d'humidité selon l'une quelconque des revendications précédentes caractérisé en ce que la composition céramique comprend une solution solide de deux oxydes métalliques dont deux sont des oxydes métalliques binaires de formule M₂M¹O₄ où M est un métal divalent et M¹ est un métal tétravalent.

8. Détecteur d'humidité selon la revendication 7 dans lequel M¹ est identique dans les deux oxydes métalliques.

9. Détecteur d'humidité selon l'une quelconque des revendications précédentes, caractérisé en ce que la composition céramique est poreuse.

10. Procédé pour la détermination du taux d'humidité de l'atmosphère, le procédé comprenant la mesure de la résistance d'un corps céramique semi-conducteur comprenant une solution solide d'au moins deux oxydes métalliques dont au moins l'un d'entre eux est un oxyde métallique binaire suivant la formule M₂M¹O₄ où M est un métal divalent et M¹ est le silicium ou le germanium, ou dans lequel au moins l'un des oxydes métalliques est choisi à partir de CoO, Co₃O₄, NiO, Co₂SiO₄, Ni₂SiO₄, Co₂GeO₄, Ni₂GeO₄, Co₂SnO₄ et Ni₂SnO₄, une surface du corps étant exposée à l'atmosphère.

11. Procédé selon la revendication 10 dans lequel M est Zn, Co est Ni.

12. Procédé selon la revendication 10 ou 11 dans lequel les deux oxydes métalliques sont des oxydes métalliques binaires.
